# EUROPÄISCHE PATENTANMELDUNG

(11) **EP 0 937 571 A1**
(43) Veröffentlichungstag der Anmeldung: **25.08.1999**
(21) Anmeldenummer: 99100842.6
(22) Anmeldetag: 19.01.1999
(51) Int. Cl.: B29D 30/08

(54) **Verfahren zur Herstellung eines Luftreifens**

(30) Priorität: 04.02.1998 DE 19804069
(71) Anmelder: Continental Aktiengesellschaft, 30165 Hannover (DE)
(72) Erfinder: Frerichs, Udo, 30588 Langenhagen (DE)

(57) **Zusammenfassung**

Verfahren zur Herstellung eines Reifens, insbesondere zur Herstellung eines Luftreifens für Kraftfahrzeuge, wobei das Verfahren einen schrittweisen Aufbau des Reifens mit einer Innenseele (4) aus einer möglichst weitgehend luftundurchlässigen Schicht, zumindest einer mit Festigkeitsträgern versehenen Karkassenlage (2), Hornprofilen, Wulstkernen (5), Seitenwänden (13) sowie einem Gürtelverband (11), ggf. einer ein- oder mehrteiligen Gürtelbandage und einem Laufstreifen (12) umfaßt, und das Herstellverfahren in zwei voneinander getrennte Verfahrensteile A und B geteilt ist, wobei im Verfahrensteil A erste Reifenbauteile, die zumindest die Wulstverstärkungen und -kerne (22), die Kernreiter (6) und die Hornprofile (7) enthalten, aus in bezug auf den Reifenquerschnitt im wesentlichen je eine Karkassenhälfte bildenden Karkassenlagen (17) aufgebaut und anschließend in einer Vulkanisationsform mindestens teilweise vulkanisiert werden, die sowohl der Oberfläche als auch dem bzw. den Festigkeitsträger(n) eine vorbestimmte Querschnittskontur vermittelt, wobei im Verfahrensteil B je zwei erste Reifenbauteile durch Hinzufügen des Gürtelverbandes (11), gegebenenfalls der zumindest einlagigen ein- oder mehrteiligen Gürtelbandage und des Laufstreifens (12) miteinander verbunden und zu einem Komplettreifen (1) aufgebaut werden, welcher ebenfalls einem Vulkanisationsvorgang unterzogen wird.

## Beschreibung

Die vorliegende Erfindung betrifft ein Verfahren zur Herstellung eines Reifens, insbesondere zur Herstellung eines Luftreifens für Kraftfahrzeuge, wobei das Verfahren einen schrittweisen Aufbau des Reifens mit einer möglichst weitgehend luftundurchlässigen Schicht, zumindest einer Karkassenlage, Hornprofilen, Wulstkernen, Seitenwänden sowie einem Gürtelverband, ggf. einer ein- oder mehrteiligen Gürtelbandage und einem Laufstreifen umfaßt, und das Herstellverfahren in zwei voneinander getrennte Verfahrensteile A und B geteilt ist.

Ein Verfahren zur Herstellung eines Neureifens, wie es beispielsweise derzeit üblich ist, wird im folgenden für einen Luftreifen für einen Personenkraftwagen zusammenfassend erläutert. Die Zeichnungsfiguren 4a bis 4f zeigen schematisch die einzelnen Verfahrensschritte.

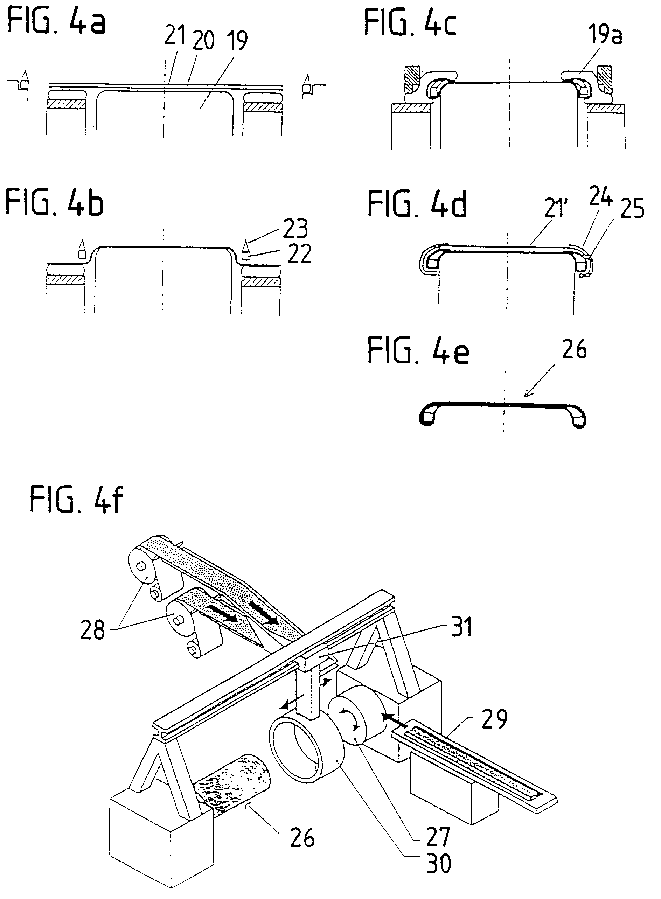

Wie in Figur 4a gezeigt ist, wird auf eine Aufbautrommel 19 zuerst die Innenplatte 20 eines Reifens und anschließend eine Karkassenlage 21 aufgebracht. Bei expandierter Trommel 19 werden die Wulstkerne 22 mitsamt Apex 23 gesetzt (Fig. 4b). Es folgt der Hochschlagvorgang, indem die Karkassenlagenenden 21 um die Wulstkerne 22 gefaltet werden. Dieser Vorgang wird mit Hilfe von Bälgen 19a durchgeführt (Fig. 4c). Anschließend werden eine weitere Karkassenlage 21' (falls eine zweite Lage vorgesehen ist), die Seitenstreifen 24 (Seitenwandteile) und die Hornprofile 25 angebracht (Fig. 4d). Die Reifenkarkasse 26 ist nun fertiggestellt und kann von der Aufbautrommel 19, die wieder in Ihre ursprüngliche Lage gebracht wird, entfernt werden (Fig. 4e).

Figur 4f zeigt den weiteren Aufbau zum fertigen Rohreifen. Die Reifenkarkasse 26 wird zu einer zweiten Aufbautrommel transferiert, die einen Bombierteil umfaßt. Auf einer gesonderten Gürteltrommel 27 werden die Gürtellagen 28, im allgemeinen sind dies zwei oder drei gummierte Stahlkordlagen, aufgebracht und ggf. mit einer oder zwei Lage(n) einer Nylonbandage versehen. Zwischen einzelnen Gürtellagen können Gürtelpufferstreifen (hier nicht dargestellt) angeordnet werden. Auf diesen Gürtelverband wird schließlich noch der ggf. mit einer Unterplatte versehene Laufstreifen 29 aufgebracht. Eine einen Tragering 30 für den Gürtellaufstreifenverband umfassende Transfereinrichtung 31 transportiert den Gürtellaufstreifenverband zur Reifenkarkasse 26 und positioniert diesen über der Reifenkarkasse 26. Diese ist bereits zentriert und vorbombiert und wird nun vollends bombiert, mit dem Gürtellaufflächenpaket zusammengefügt, wobei nach dem Entfernen der Transfereinrichtung 31 der Laufstreifen mitsamt dem Gürtelpaket angerollt wird.

Bei dem beschriebenen Verfahren handelt es sich um den sogenannten Zweistufenaufbau. Es ist auch üblich, ein Einstufenverfahren einzusetzen, bei dem die Karkassenherstellung und die Fertigstellung des Rohreifens auf einer einzigen Trommel erfolgt.

Der fertiggestellte Rohreifen wird in einer entsprechenden Vulkanisationsform ausvulkanisiert und erhält somit seine endgültige Gestalt mit eingeformtem Laufstreifenprofil und beschriftetem bzw. auch dekorativ gestalteten Seitenwänden.

Die bekannten Herstellverfahren setzen sich aus in ihren einzelnen Schritten exakt festgelegten Produktionsabläufen zusammen, die in ihrer Gesamtheit die Qualität und die Eigenschaften des fertigen Produktes mitbestimmen.

Das Vorhalten der heute erforderlichen Abmessungsvielfalt unterschiedlichster Reifentypen erfordert beim Hersteller, gerade im Hinblick auf die konventionellen Herstellungsverfahren, einen großen fertigungstechnischen und logistischen Aufwand für die häufige Umstellung und Anpassung der auf große Mengen einheitlicher Abmessung ausgelegten Fertigungslinie und steht in einem Zielkonflikt mit der ebenfalls erforderlichen ständigen Kostensenkung und Rationalisierung in den Herstellungsbetrieben. Es besteht also der dringende Wunsch nach einer flexibleren und anpassungsfähigen Fertigung, die Änderungen des Produktionsprogrammes und der Abmessungen ohne großartige Auswirkungen auf die Kosten zuläßt.

Eine Möglichkeit zur Erhöhung der Flexibilität eines Fertigungsprozesses zeigt die DE-OS 195 07 486, bei dem das Herstellverfahren eines Reifens in zwei voneinander getrennte Verfahrensteile A und B geteilt ist, wobei im Verfahrensteil A im wesentlichen eine vulkanisierte Karkasse und im Verfahrensteil B der Laufstreifen und/oder restliche Bauteile aufgebracht werden. In Anwendung dieses Verfahrens erreicht man die Nutzung eines Grundkörpers für eine Reihe von fertigen Reifen, wobei jedoch noch als nachteilig zu bemerken ist, daß zum einen der Grundkörper annähernd die Form des fertigen Reifens besitzt und somit Lager- und Transportraum benötigt und daß darüber hinaus das Problem besteht, daß mit einem Grundkörper lediglich eine begrenzte Anzahl von Fertigreifen herzustellen ist, so daß zwar eine reduzierte, aber eben doch noch recht große Anzahl von Grundkörperabmessungen bereitgehalten werden müssen, um die gesamte Abmessungspalette zu erfassen.

Ein weiteres mehrstufiges Verfahren zur Herstellung von Luftreifens, bei dem jedoch als Ziel nicht die Flexibilisierung der Herstellung anvisiert ist, sondern lediglich die Möglichkeit einer Zwischenlagerung bereitgestellt werden soll und bei dem - wie bisher für jede Abmessung - auch ein speziell hierfür hergestellter Karkasskörper benötigt wird, offenbart die DE-OS 2 032 636. Bei diesem Verfahren wird eine laufflächenfreie Reifendecke, d. h. ein Karkasskörper, zunächst als Teilreifen hergestellt, danach mit einem Schutzüberzug versehen und anschließend einer Teilvulkanisation zugeführt. Bei dieser Teilvulkanisation wird die Innenseite der Reifendecke vollständig ausvulkanisiert, während die radial äußere Oberfläche der laufflächenfreien Reifendecke nicht vulkanisiert wird. Es steht so ein über seinen Querschnitt halb ausvulkanisierter laufflächenfreier Reifen mit einem Schutzüberzug der weiteren Fertigung zur Verfügung.

Der Schutzüberzug soll den Teilreifen während einer Zwischenlagerzeit vor schädlichen Einflüssen schützen. Zu einem späteren Zeitpunkt wird der Schutzüberzug entfernt und eine Lauffläche auf den laufflächenfreien Reifen aufgebracht, wobei der fertige Reifen dann unter Druck und Hitze vollständig ausvulkanisiert wird.

Bei dem nur auf der Innenseite vulkanisierten zunächst hergestellten Teilreifen besteht der Nachteil, daß seine radial äußeren Bereiche, die nicht vulkanisiert werden, auch die Gürtellagen (Zwischenaufbaulagen) enthalten, die durch das Bombieren vor der Teilvulkanisation aus ihrer ursprünglich vorgesehenen Lage verschoben werden können. Die unteren Lagen des Gürtelpaketes werden hierbei durch den Teilvulkanisationsvorgang beeinflußt und in ihrer Verschiebung fixiert, während die äußeren Lagen des Gürtelpaketes in dem noch weichen unvulkanisierten Kautschuk verbleiben und durch die schon fixierten inneren Gürtellagen einem permanenten Spannungszustand unterworfen sind. Bei entsprechend langer Lagerung kann nun ein Wandern der äußeren Gürtellagen in dem noch weichen Kautschuk erfolgen, wodurch eine über den Umfang gesehen ungleiche Festigkeitsverteilung beim späteren Reifen sich ausbilden kann.

Das spätere Aufbringen der Lauffläche mit der dazu nochmalig nötigen Vulkanisation und Restbombierung kann diesen Effekt nachteilig unterstützen.

Die US 3,218,209 offenbart ein Herstellungsverfahren, bei dem fertig hergestellte Reifenteile zerschnitten und später wieder zusammengefügt werden. So wird hier beispielsweise die vulkanisierte Karkasse in zwei Karkasshälften geteilt, während der Laufstreifen und die Gürtellagen separat vulkanisiert werden. Die geteilten Karkassen werden später wieder zu fertigen Karkassen zusammengefügt. Der hier vorliegende verfahrensimmanente Nachteil einer zunächst erfolgenden Herstellung eines Teiles, einer nachträglichen Zerlegung und einem dann folgenden Wiederaufbau, insbesondere im Hinblick auf die Fertigungskosten und die Fertigungslogistik, wird noch überlagert von einem weiteren Problem, welches dadurch entsteht, daß bei der Trennung der Karkasse in zwei Karkasshälften auch die Gewebelagen getrennt werden und damit zwangsläufig eine Verbindung der Gewebefäden und Verstärkungsmaterialien mit der Oberfläche des Reifenteiles bzw. mit der Umgebungsatmosphäre aufgebaut wird. Dies kann unter anderem zur Aufnahme von Feuchtigkeit sowie zur Oxidation und damit zu Problemen im nachfolgend wieder aufgebauten Verbund führen.

Für die Erfindung bestand daher die Aufgabe, ein neues flexibles Herstellungsverfahren bereitzatellen, bei dem eine vertiefte Modulfertigung erreichbar und die Anbindung der Endabmessungsbereiche an Vorfertigungsteile verringert ist, welches eine größere Einflußnahme auf bestimmte Reifeneigenschaften zur Erzielung und Sicherstellung einer hohen Produktqualität gestattet, und welches darüber hinaus eine möglichst geringe Beeinflussung der Verstärkungslagen und eine hochfeste Verbindung der einzelnen Module zum Fertigreifen erlaubt.

Gelöst wird diese Aufgabe durch die Merkmale des Hauptanspruchs. Vorteilhafte Weiterbildungen sind in den Unteransprüchen erfaßt.

Hierbei werden im Verfahrensteil A erste Reifenbauteile, die zumindest die Wulstverstärkungen und kerne, die Kernreiter und die Hornprofile enthalten, aus in bezug auf den Reifenquerschnitt senkrecht zur Zenitebene im wesentlichen je eine Karkassenhälfte bildenden Karkassenlagen aufgebaut und anschließend in einer Vulkanisationsform mindestens teilweise vulkanisiert, die sowohl der Oberfläche als auch dem bzw. den Festigkeitsträger(n) eine vorbestimmte Querschnittskontur vermittelt, wobei im Verfahrensteil B je zwei erste Reifenbauteile mit ihren Innenseiten zueinander zeigend positioniert, durch Hinzufügen des Gürtelverbandes, gegebenenfalls der zumindest einlagigen ein- oder mehrteiligen Gürtelbandage und des Laufstreifens miteinander verbunden und zu einem Komplettreifen aufgebaut werden, welcher ebenfalls einem Vulkanisationsvorgang unterzogen wird.

Mit dem erfindungsgemäßen Verfahren erreicht man zum einen eine sichere allseitge Einbindung der Verstärkungselemente (Fäden) innerhalb der Gummimatrix der Karkasslagen und kann sich darüber hinaus auf die Herstellung lediglich einer Karkasshälfte einer Abmessung beschränken, die dann - spiegelbildlich gedreht - gegen eine weitere Karkasshälfte gesetzt und mit dieser zusammen in dem Verfahrensteil B die Gesamtkarkasse bilden kann. Die Herstellung auf einer entsprechend angepaßten Aufbaumaschine wird dadurch ebenso vereinfacht wie beispielsweise der zur Lagerung erforderliche Raum und die Lagerung selbst, da die Karkasshälften gegebenenfalls durch Trennlagen voneinander beabstandet als kreisringförmige Halbschalen ineinander gelagert und so leicht transportiert werden können. Ein solches Herstellungsverfahren eignet sich auch in besonderem Maße für die Fertigung von nicht symmetrischen Reifen, etwa solchen für unterschiedliche Felgenhorndurchmesser oder für unterschiedlichen Karkassaufbau auf der in Laufrichtung inneren und äußeren Reifenseite. Es werden dann eben unterschiedliche Karkasshälften als erste Reifenbauteile im Verfahrensteil A hergestellt.

Ein weiterer Vorteil ergibt sich dadurch, daß die Karkasslagen durch die mindestens teilweise erfolgende Vulkanisation bereits in ihrer Kontur fixiert sind. Diese Konturfixierung kann natürlich noch dadurch verstärkt werden, daß die Karkasshälften bereits ausvulkanisiert zur Verfügung gestellt werden, wodurch das Handling und das spätere Aufspannen auf weitere Bearbeitungsmaschinen erleichtert wird. Nach dem erfindungsgemäßen modulartigen Verfahren lassen sich auch die Reifeneigenschaften während des Herstellungsprozesses optimieren. Welche Reifeneigenschaften und in welchem Ausmaß sie beeinflußbar sind, ist davon abhängig, welche Module hergestellt und wieweit sie in den einzelnen Verfahrensschritten komplettiert sind. So läßt sich beispielsweise eine gezielte Einflußnahme auf Seitenwandeinschnürungen und die Gleichförmigkeit des Reifens erreichen, da bei der Herstellung von Karkasshälften die eingelegten Verstärkungslagen lediglich auf einer Seite mit dem Wulstkern verbunden sind, so daß bei der Bombierung entstehende Spannungszustände sich ohne Verformungsbehinderungen ausgleichen können.

Darüber hinaus bietet das erfindungsgemäße Verfahren den Vorteil einer weitgehenden Flexibilisierung der Produkt- und Produktionsplanung.

Die fertig vulkanisierten Reifenbauteile sind über einen längeren Zeitraum lagerbar, so daß die Entscheidung, in welcher Weise der Reifen komplettiert werden soll, z. B. bezüglich der Laufstreifenmischung oder des Laufstreifenprofiles, auf einen späteren Zeitpunkt verschoben werden kann. Der Reifenhersteller wird somit in der Lage versetzt, den Marktanforderungen, hier etwa bei der Umstellung von Sommer- auf Winterreifen, entsprechend und prompt zu reagieren.

Vorteilhafterweise werden im Verfahrensteil A Teile der Seitenwand mit den ersten Reifenbauteilen ausvulkanisiert und im Verfahrensteil B mit den fehlenden Seitenwandteilen zu einem Komplettreifen aufgebaut. Damit können auf besonders einfache Weise unterschiedliche Gummischichten in die Seitenwand eingebaut werden, etwa eine Grund- und eine Deckschicht unterschiedlicher Abriebfestigkeiten oder auch besondere Verstärkungselemente eingebettet werden, so daß hierdurch eine beliebige Anpassbarkeit auf die Reifeneigenschaften erreicht wird. Auch dies kann so gestaltet werden, daß eine Grundausstattung im Seitenwandaufbau auf dem Universalmodul vorgesehen wird, während die Spezifika in dem späteren Komplettierungsverfahren B eingestellt werden.

Vorteilhafterweise beinhalten die im Verfahrensteil A hergestellten Reifenbauteile bereits Teile der Innenseele, die ausvulkanisiert und im Verfahrensteil B mit den fehlenden Teilen der Innenseele zu einem Komplettreifen aufgebaut werden. Das Aufbringen von Teilen der Innenseele erleichtert nicht nur das im Verfahrensteil B vorzusehende Komplettieren dadurch, daß an der Innenseite entweder ganz auf die Vulkanisierung verzichtet oder aber nur eine Restvulkanisierung durchgeführt werden kann, sondern es schließt auch bereits die empfindlichen und innerhalb der Karkasslagen befindlichen verstärkenden Gewebelagen noch einmal gegenüber allen äußeren Einflüssen ab, so daß Transport oder Lagerung ohne Probleme für die spätere Verarbeitung bleiben.

Vorteilhafterweise werden die im Verfahrensteil A ersten Reifenbauteile mit einer Innenseele ausvulkanisiert, die in Bezug auf den Reifenquerschnitt so bemessen sind, daß sich die Innenseelen bei dem im Verfahrensteil B erfolgenden Aufbau zu einem Komplettreifen überlappen. Auch hier liegen die Vorteile in den bereits genannten Erleichterungen im Verfahrensteil B und im Schutz der empfindlichen Karkasslagen, wobei ein weiterer Vorteil dadurch erreicht wird, daß durch die überlappenden Innenseelen, die im Verfahrensteil B miteinander verbunden werden, sich ein vollkommen sicherer Aufbau der luftdichten Holobutyl-Innenseele ohne Stoßstellen ergibt.

In einer weiteren vorteilhaften Ausbildung können die im Verfahrensteil A ausvulkanisierten Karkassenlagen so bemessen sein, daß sie nach dem im Verfahrensteil B erfolgenden Aufbau zu einem Komplettreifen im Bereich der Gürtellagen voneinander beabstandet ausgebildet sind, wobei im Verfahrensteil B der durch die beabstandeten Karkassenlagen entstandene Zwischenraum durch einen Materialstreifen entsprechender Breite ausgefüllt wird. Zum einen kann man durch eine solche Verfahrensausbildung in dem Fall, indem man einen in seiner Dicke angepaßten Materialstreifen einlegt, diesen so dimensionieren, daß die auf Stoß liegenden oder überlappenden Innenseelen keinerlei Vorsprünge oder Überhebungen auf der Innenseite des Reifens erzeugen. Wenn die Innenseelen auf Stoß gelegt werden, kann dabei der Materialstreifen selbst auch eine nach innen weisende Holobutylschicht aufweisen.

Andererseits läßt sich durch die Wahl der Breite des Materialstreifens die Reifenabmessung insgesamt, d. h. das Höhen-Breiten-Verhältnis verändern, so daß aus lediglich einer schalenförmigen Halbkarkasse durch Zwischenlage mehr oder weniger breiter Streifen, Breitreifen und Reifen normaler Abmessung gleichermaßen erzeugt werden können, was im Hinblick auf die vorzuhaltenden Werkzeuge und auf die vorzusehenen Fertigungsverfahren eine enorme Flexibilität erlaubt.

Vorteilhafterweise wird im Verfahrensteil A die radial äußere Karkassenlage bezüglich der in ihr verlaufenden Lage von Festigkeitsträgern mindestens teilweise, d. h. im wesentlichen in den unterhalb des Laufstreifens liegenden Bereichen, asymmetrisch gummiert und ist derart aufgebracht, daß die Seite mit der dickeren Gummierung außen liegt. Dies führt zu einer Anpassung des Reifenaufbaus an die Belastungen im Betriebszustand und zu einer Optimierung der Vorbereitung des Untergrundes für die im Verfahrensteil B aufzubringenden Reifenbauteile.

Die Haftung zu den im nachfolgenden Verfahrensteil B aufgebrachten Teilen kann weiter verbessert werden, indem sich die Gummierung der Festigkeitsträger auf jeder Seite der Lage bezüglich der Mischungszusammensetzung unterscheidet.

Durch die im Verfahrensteil A erfolgende Vulkanisation der ersten Reifenbauteile erhält man einen Teilreifen höchster Gleichförmigkeit (Tyre Uniformity). Durch eine solche Vulkanisation ohne Profillaufstreifen liegen die Karkassenlagen bei der Vulkanisation an der glatten Innenwand einer Heizform an, so dass durch den Innendruck in der Form keine Verschiebungen in der Gewebestruktur der Verstärkungslagen hervorgerufen werden können, wie dies im einstufigen Verfahren, bei dem die Profilklötze durch Innendruck in die Form gepresst werden müssen, gelegentlich beobachtet wird.

Sollten bei dem erfindungsgemäßen Verfahren darüber hinaus doch einmal Reifenungleichförmigkeiten auftreten, so können diese vor der Durchführung des Verfahrensteiles B eliminiert werden, in dem beispielsweise ein Abschleifen der Außenoberfläche der ersten Reifenbauteile vorgesehen wird.

Vorteilhafterweise erfolgt der Lagenumschlag der im Verfahrensteil A ausvulkanisierten Karkassenlagen bis auf eine Umschlaghöhe, deren Bereich nach unten durch einen Mindestabstand von 44 mm vom unteren Kernrand und nach oben durch den Gürtelkantenbereich des im Verfahrensteil B aufzubringenden Gürtelverbandes begrenzt wird. Einerseits vermeidet man hier das Einlegen der Lagenumschlagsenden in die Walkzone, die in der Regel in einem Abstand zwischen 20 und 40 mm vom unteren Kernrand liegt und die beim Betrieb eines Reifens in besonderem Maße verformt wird. Das erfindungsgemäße Verfahren erlaubt zudem insgesamt eine sehr genaue Tolerierung der Umschlagshöhe, da die üblicherweise bei Komplett-Karkassen auftretenden Probleme mit dem Auszug aus den Kernen und der hierzu erforderlichen vorherigen Anpassung der Karkassbreiten bei einer erfindungsgemäß geteilten Karkasse nicht mehr auftreten.

Andererseits können die Karkasslagen auch soweit bis etwa in den Gürtelkantenbereich geführt werden, daß sowohl ein Reifen mit verstärkten Karkassen (reinforced) hergestellt werden kann, als auch ein besonders guter Formerhalt während des Transportes und während der Lagerzeit der 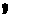 Halbschalen-Karkassen" erreicht wird.

In diesem Zusammenhang ist es besonders vorteilhaft, wenn die derart im Verfahrensteil A aufgebauten ersten Reifenbauteile in einer Vulkanisationsform ausvulkanisiert wird, die eine bestimmte Kontur vermittelt, die insbesondere der Fertigreifenkontur entspricht bzw. angepaßt ist und mit der im Verfahrensteil B vermittelten Kontur im wesentlichen übereinstimmt. Wird im Verfahrensteil B der Laufstreifen aufgebracht, kann durch die dann nicht mehr notwendige Bombierung die Verbindung zwischen Laufstreifen und Reifenkarkasse ohne mechanische Beanspruchung ausvulkanisiert und damit in einer bisher unerreichten Qualität hergestellt werden.

Im Verfahrensteil B kann eine Bandage aus wärmeschrumpffähigen Festigkeitsträgern, beispielsweise Nylonfäden, aufgebracht werden. Hierdurch ergibt sich nicht nur eine weitere vorteilhafte Möglichkeit, die Reifeneigenschaften zu beeinflussen, sondern man vermeidet mit der geteilten Karkasse auch bei stark schrumpfenden Bandagen die sich unterhalb des Gürtels in den Karkassfäden oft ausbildenden Druckspannungen, die zu Schäden im Gewebe führen.

In einer weiteren und besonders im Hinblick auf den exzellenten Verbund vorteilhaften Ausbildung des Verfahrens wird im Verfahrensteil B der Komplettreifen durch Hinzufügen des roh aufgebrachten Laufstreifens aufgebaut. Durch eine solche Verfahrensweise lässt sich die den Verfahrensteil B abschließende Vulkanisation in der Prozessführung durch Druck- und Temperatureinstellung optimieren. Gleiche Vorteile ergeben sich beim Aufbringen eines rohen Seitenwandabdeckstreifens.

Im Sinne einer Prozessautomatisierung bzw. -optimierung lässt sich ein roher Laufstreifen mittels eines Injection-Molding-Verfahrens oder auch durch Aufspulen aufbringen, da hier eine besondere Gleichförmigkeit in der Dichte und Struktur des Laufstreifens erreicht wird.

Die im Verfahrensteil A gefertigten ersten Reifenbauteile können ohne jede Seitenwandbeschriftung oder ohne jedes Seitenwanddesign erstellt werden. Diesbezüglich kann nun der Reifen im Verfahrensteil B beispielsweise derart komplettiert werden, daß auf jede Seitenwand ein roher Seitenwandabdeckstreifen aufgebracht wird. Die Seitenwände können dann ihre Beschriftung, ihr Design und dergleichen über die Vulkanisationsform erhalten oder aber auch nachträglich, indem der nach Verfahrensteil B fertiggestellte Reifen die Seitenwandbeschriftung bzw. das Seitenwanddesign und dergleichen durch ein Gravurverfahren, beispielsweise mittels Laser, erhält. Das letztgenannte Verfahren ist auch auf solche Fälle anwendbar, wo im Verfahrensteil B keine Seitenwandabdeckstreifen mehr verwendet werden. Natürlich kann auch im Verfahrensteil A bereits die gesamte Seitenwand aufgebaut werden.

Vorteilhafterweise werden im Verfahrensteil B die noch fehlenden Teile der Innenseele als Gummistreifen mit mehreren nebeneinanderliegenden oder sich mindestens teilweise überlappenden Windungen im wesentlichen schraubenförmig aufgespult.

Neben der hierdurch eröffneten Möglichkeit zur weiteren Prozeßautomatisierung lassen sich durch eine solche Ausbildung des Verfahrens auf besonders einfache Weise und lediglich durch die Beeinflußung von Vorschub und Steigung beim Aufspulen unregelmäßige Dickenausbildungen oder Sprünge/Unstetigkeiten in Stoßbereichen z. B. zwischen beabstandeten Karkasslagen und Zwischenlagen kompensieren.

Das Aufspulen erfolgt üblicherweise dann auf einer formstabilen Aufbautrommel, etwa auf einer Segmenttrommel oder auf einem mit Formelementen versehenen Blähbalg so, daß eine spätere Entformung problemlos möglich ist.

Anhand eines Ausführugsbeispiels soll die Erfindung näher verdeutlicht werden. Es zeigen:
- Fig. 1: eines der im erfindungsgemäßen Verfahrensteil A hergestellten ersten Reifenbauteile
- Fig. 2: eines der 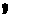 ersten" Reifenbauteile gemäß Fig. 1 mit den im erfindungsgemäßen Verfahrensteil B zu komplettierenden Reifenbauteilen
- Fig. 3: einen nach dem erfindungsgemäßen Verfahren hergestellten Reifen
- Fig. 4a - 4f: Prinzipsskizze des Reifenherstellungsverfahrens nach dem Stand der Technik.

Die Zeichnungsfiguren 4a bis 4f dienen zur Veranschaulichung des zum Stand der Technik gehörenden Zweistufenaufbaus und zeigen schematisch die einzelnen Verfahrensschritte, die weiter oben bereits beschrieben sind.

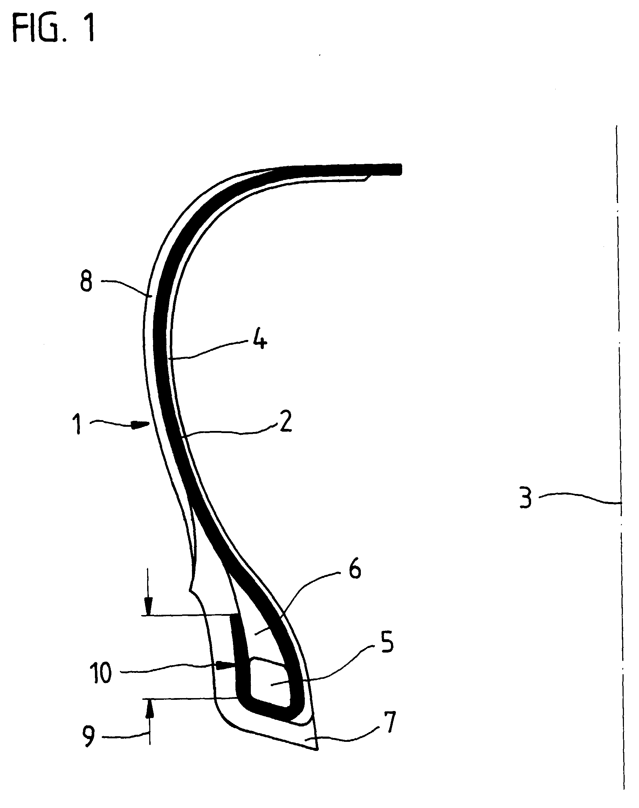

Die Figur 1 zeigt ein nach dem erfindungsgemäßen Verfahren im Verfahrensteil A hergestelltes erstes Reifenbauteil 1 mit den Karkasslagen 2, welche in Bezug auf den zur mittleren Zenitebene 3 symmetrischen Reifenquerschnitt im wesentlichen eine Karkasshälfte bilden.

Das Reifenbauteil 1 ist bereits mit der Innenseele 4, dem Kern 5 und dem Apex-Profil oder Kernreiter 6 versehen und weist auch das Hornprofil 7 sowie ein erstes dünnes, inneres Seitenteil 8 auf.

Die Karkasslagen 2 sind zur Reifenaußenseite um den Kern 5 umgeschlagen und über eine Umschlagslänge 9 im Seitenbereich des Reifens zurückgeführt und bilden damit den Lagenumschlag 10, der hier als 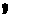 Low ply turn up" (Niedrig-Lagenumschlag) so ausgeführt ist, daß die Umschlagslänge 9 lediglich 10 mm beträgt.

Das so ausgebildete erste Reifenbauteil 1 ist bereits ausvulkanisiert und entspricht in seiner Kontur im wesentlichen der Kontur des Fertigreifens. Es läßt sich durch spiegelbildliche Anordnung sowohl für die eine wie für die andere Reifenseite im Reifenkörper verwenden.

Die innerhalb der Karkasslagen befindlichen und hier nicht näher dargestellten Gewebelagen sind allseitig, auch an den Stoßenden, mit einer Gummischicht umgeben, so daß in den Gewebelagen keinerlei Schädigungen durch äußere Einflüsse wie z. B. durch das Eindringen von Feuchtigkeit stattfinden kann.

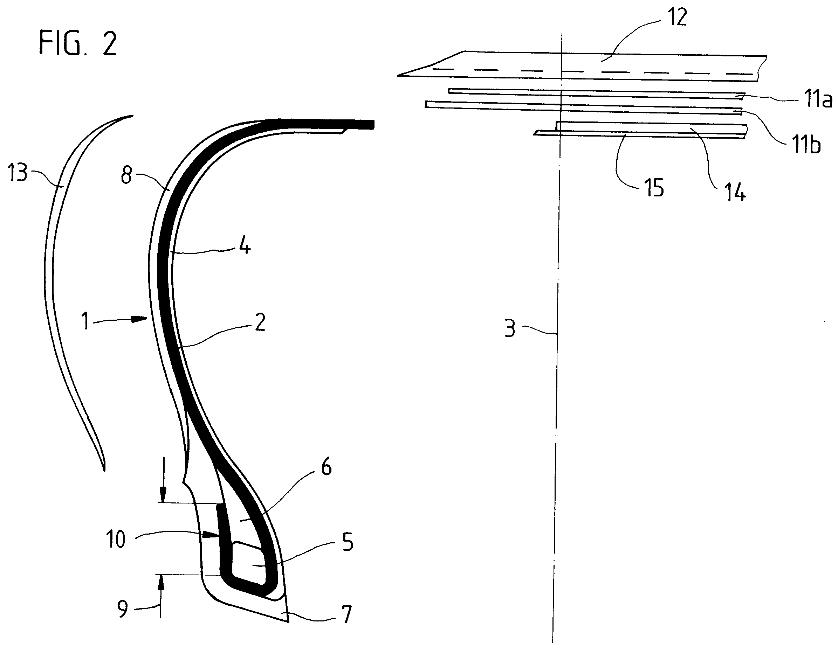

Die Figur 2 zeigt ein erstes Reifenbauteil 1 mit den komplettierenden Reifenbauteilen, welche im erfindungsgemäßen Verfahrensteil B mit dem ersten Reifenbauteil zusammengefügt werden. Es sind dies hierbei die beiden Gürtellagen 11a und 11b, der aus einer Cap- und Base-Lage bestehende Laufstreifen 12, das jeweils äußere Seitenteil 13, der im hier vorliegenden Fall von beabstandeten Karkassenlagen zum Ausfüllen des entstehenden Zwischenraumes eingelegte Material- oder Füllstreifen 14, sowie der Innenseelenmittelteil 15. Der Innenseelenmittelteil 15 ist hierbei bereits mit dem Füllstreifen 14 in einer Vorbereitungsstufe verbunden worden.

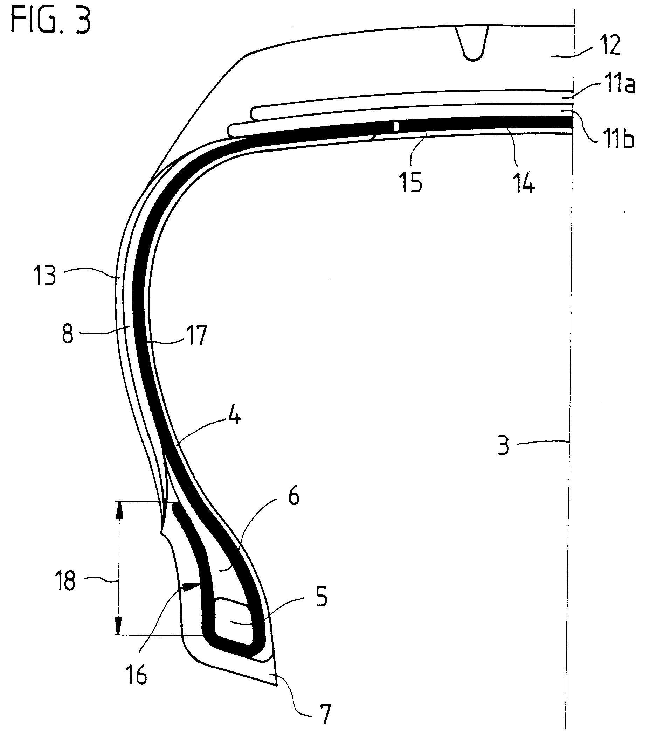

Die Figur 3 zeigt einen nach dem erfindungsgemäßen Verfahren bereits fertig hergestellten Reifen im Querschnitt, jedoch mit einem im Vergleich zu dem in den Figuren 1 und 2 dargestellten Reifen bzw. dessen Bauteilen höheren Lagenumschlag 16.

Auch dieser Reifen ist zusammengefügt aus zwei ersten Reifenbauteilen mit den jeweiligen Karkassenlagen 17, den Seitenteilen 8, den Innenseelen 4, den Kernen 5, den Kernreitern 6 sowie den Hornprofilen 7. Der Lagenumschlag wird hier über die Umschlagslänge 18 zurückgeführt, welche in diesem Fall 46 mm beträgt.

Erkennbar sind ebenfalls die im Verfahrensteil B zur Komplettierung des Fertigreifens hinzugefügten Reifenbauteile wie die Seitenwandaußenteile 13, die Gürtellagen 11a und 11b, der Laufstreifen 12, sowie der mit der Innenseele 15 verbundene Füllstreifen 14.

### Bezugszeichenliste

- 1: erstes Reifenbauteil
- 2: Karkasslage
- 3: Zenitebene
- 4: Innenseele
- 5: Kern
- 6: Kernreiter
- 7: Hornprofil
- 8: inneres Seitenteil
- 9: Umschlagslänge
- 10: Lagenumschlag
- 11a, 11b: Gürtellage
- 12: Laufstreifen
- 13: äußeres Seitenteil
- 14: Füllstreifen
- 15: Innenseelenmittelteil
- 16: Lagenumschlag
- 17: Karkassenlage
- 18: Umschlagslänge
- 19: Aufbautrommel
- 19a: Balg
- 20: Innenplatte
- 21, 21': Karkasslage
- 22: Wulstkern
- 23: Apex
- 24: Seitenstreifen
- 25: Hornprofil
- 26: Reifenkarkasse
- 27: Gürteltrommel
- 28: Gürtellage
- 29: Laufstreifen
- 30: Tragring
- 31: Transfereinrichtung

## Patentansprüche

1. Verfahren zur Herstellung eines Reifens, insbesondere zur Herstellung eines Luftreifens für Kraftfahrzeuge, wobei das Verfahren einen schrittweisen Aufbau des Reifens mit einer Innenseele aus einer möglichst weitgehend luftundurchlässigen Schicht, zumindest einer mit Festigkeitsträgern versehenen Karkassenlage, Hornprofilen, Wulstkernen, Seitenwänden sowie einem Gürtelverband, ggf. einer ein- oder mehrteiligen Gürtelbandage und einem Laufstreifen umfaßt, und das Herstellverfahren in zwei voneinander getrennte Verfahrensteile A und B geteilt ist,
**dadurch gekennzeichnet,**
daß im Verfahrensteil A erste Reifenbauteile, die zumindest die Wulstverstärkungen und -kerne, die Kernreiter und die Hornprofile enthalten, aus in bezug auf den Reifenquerschnitt senkrecht zur Zenitebene im wesentlichen je eine Karkassenhälfte bildenden Karkassenlagen aufgebaut und anschließend in einer Vulkanisationsform mindestens teilweise vulkanisiert werden, die sowohl der Oberfläche als auch dem bzw. den Festigkeitsträger(n) eine vorbestimmte Querschnittskontur vermittelt, wobei im Verfahrensteil B je zwei erste Reifenbauteile durch Hinzufügen des Gürtelverbandes, gegebenenfalls der zumindest einlagigen ein- oder mehrteiligen Gürtelbandage und des Laufstreifens miteinander verbunden und zu einem Komplettreifen aufgebaut werden, welcher ebenfalls einem Vulkanisationsvorgang unterzogen wird.

2. Verfahren nach Anspruch 1, dadurch gekennzeichnet, daß im Verfahrensteil A Teile der Seitenwand mit den ersten Reifenbauteilen ausvulkanisiert und im Verfahrensteil B mit den fehlenden Seitenwandteilen zu einem Komplettreifen aufgebaut werden.

3. Verfahren nach Anspruch 1 oder 2, dadurch gekennzeichnet, daß im Verfahrensteil A Teile der Innenseele mit den ersten Reifenbauteilen ausvulkanisiert und im Verfahrensteil B mit den fehlenden Teilen der Innenseele und zu einem Komplettreifen aufgebaut werden.

4. Verfahren nach Anspruch 1 oder 2, dadurch gekennzeichnet, daß im Verfahrensteil A erste Reifenbauteile mit einer Innenseele ausvulkanisiert werden, die in bezug auf den Reifenquerschnitt so bemessen sind, daß sich die Innenseelen bei dem im Verfahrensteil B erfolgenden Aufbau zu einem Komplettreifen überlappen.

5. Verfahren nach Anspruch 1 bis 4, dadurch gekennzeichnet, daß die im Verfahrensteil A ausvulkanisierten Karkassenlagen so bemessen sind, daß sie nach dem im Verfahrensteil B erfolgenden Aufbau zu einem Komplettreifen im Bereich der Gürtellagen voneinander beabstandet ausgebildet sind, wobei im Verfahrensteil B der durch die beabstandeten Karkassenlagen entstandene Zwischenraum durch einen Materialstreifen entsprechender Breite ausgefüllt wird.

6. Verfahren nach Anspruch 1 bis 5, dadurch gekennzeichnet, daß im Verfahrensteil A die radial äußere Karkassenlage bezüglich der in ihr verlaufenden Lage von Festigkeitsträgern asymmetrisch gummiert ist und derart aufgebracht wird, daß die Seite mit der dickeren Gummierung außen liegt.

7. Verfahren nach Anspruch 1 bis 6, dadurch gekennzeichnet, daß sich die Gummierung der radial äußeren Lage der in der Karkasse verlaufenden Festigkeitsträger auf jeder Seite der Lage bezüglich der Mischungszusammensetzung unterscheidet.

8. Verfahren nach Anspruch 1 bis 7, dadurch gekennzeichnet, daß der Lagenumschlag der im Verfahrensteil A ausvulkanisierten Karkassenlagen bis auf eine Umschlagshöhe erfolgt, deren Bereich nach unten durch einen Mindestabstand von 44 mm vom unteren Kernrand und nach oben durch den Gürtelkantenbereich des im Verfahrensteil B aufgebrachten Gürtelverbandes begrenzt wird.

9. Verfahren nach Anspruch 1 bis 8, dadurch gekennzeichnet, daß im Verfahrensteil A den ersten Reifenbauteilen Konturen vermittelt werden, die mit denen der Karkasse des im Verfahrensteil B hergestellten Komplettreifens im wesentlichen übereinstimmen.

10. Verfahren nach Anspruch 1 bis 9, dadurch gekennzeichnet, daß im Verfahrensteil B eine Gürtelbandage aus wärmeschrumpffähigen Festigkeitsträgern, insbesondere Nylonfäden, aufgebracht wird.

11. Verfahren nach Anspruch 1 bis 10, dadurch gekennzeichnet, dass im Verfahrensteil B der Komplettreifen durch Hinzufügen des roh aufgebrachten Laufstreifens aufgebaut wird.

12. Verfahren nach Anspruch 1 bis 11, dadurch gekennzeichnet, daß im Verfahrensteil B auf jede Seitenwand ein roher Seitenwandabdeckstreifen aufgebracht wird.

13. Verfahren nach Anspruch 3 bis 12, dadurch gekennzeichnet, daß im Verfahrensteil B die noch fehlenden Teile der Innenseele als Gummistreifen mit mehreren nebeneinanderliegenden oder sich mindestens teilweise überlappenden Windungen im wesentlichen schraubenförmig aufgespult werden.

14. Reifen, hergestellt nach dem Verfahren gemäß einem oder mehreren der Ansprüche 1 bis 13.
